# EUROPÄISCHE PATENTSCHRIFT

(11) **EP 2 795 265 B1**
(45) Veröffentlichungstag und Bekanntmachung des Hinweises auf die Patenterteilung: **05.07.2017**
(21) Anmeldenummer: 12816474.6
(22) Anmeldetag: 21.12.2012
(51) Int. Cl.: G01F 1/692, G01F 5/00, F02D 41/18, G01F 1/696, F02M 35/10, G01M 15/04, F02D 41/04, F02D 41/06, G01F 1/684

(54) **VERFAHREN ZUM BETREIBEN EINES LUFTMASSENSENSORS**
METHOD FOR OPERATING AN AIR MASS SENSOR
PROCÉDÉ POUR FAIRE FONCTIONNER UN CAPTEUR DE MASSE D'AIR

(30) Priorität: 23.12.2011 DE 102011089898
(43) Veröffentlichungstag der Anmeldung: 29.10.2014
(73) Patentinhaber: Continental Automotive GmbH, 30165 Hannover (DE)
(72) Erfinder: KNITTEL, Thorsten, 93080 Pentling (DE)
(86) Internationale Anmeldenummer: PCT/EP2012/076632
(87) Internationale Veröffentlichungsnummer: WO 2013/092999

(56) Entgegenhaltungen:
- DE-A1-102008 020 182
- JP-A- H07 317 584
- US-A1- 2004 035 195
- US-A1- 2011 040 477

## Beschreibung

Die Erfindung betrifft ein Verfahren zum Betreiben eines Luftmassensensors, der im Ansaugtrakt einer Brennkraftmaschine angeordnet ist und die Masse der durch den Ansaugtrakt strömenden Luftmasse misst, wobei der Luftmassensensor ein Luftmassensensorelement aufweist, das Bestandteil eines als Mikro-Elektro-Mechanisches System aufgebauten anwendungsspezifischen integrierten Schaltkreises ist, wobei der anwendungsspezifische integrierte Schaltkreis zumindest ein Element zur Auswertung der von dem Luftmassensensorelement erzeugten Messsignale aufweist.

Derartige Luftmassensensoren werden beispielsweise in Kraftfahrzeugen zur Ermittlung der von einer Verbrennungskraftmaschine angesaugten Luftmasse verwendet. Auf der Basis einer möglichst zuverlässigen Information über eine angesaugte Luftmasse kann eine Verbrennung durch eine Motorsteuerung dahingehend optimiert werden, dass eine genau auf die Luftmasse abgestimmte Kraftstoffmenge den jeweiligen Brennräumen zugeführt wird. Im Ergebnis wird dadurch eine bessere Energieausnutzung bei verringertem Schadstoffausstoß erzielt.

Aus der DE 44 07 209 A1 ist ein Luftmassensensor bekannt, der in einen Ansaugkanal zur Bestimmung einer Luftmasse eingesteckt wird, wobei ein definierter Anteil der Gesamtströmung den Luftmassensensor durchströmt. Hierzu ist dieser als Einsteckkanal-Luftmassensensor ausgebildet und umfasst ein in einem Messkanal angeordnetes Sensorelement, eine in einem Gehäuse angeordnete Elektronik für dieses Sensorelement, sowie einen Auslasskanal jenseits des Sensorelements. Für eine platzsparende Anordnung werden die genannten Kanäle bzw. Luftführungswege U-, S- oder C-förmig ausgebildet, so dass eine insgesamt kompakt als Einsteckelement bauende Vorrichtung gebildet wird.

Die US 2004/0035195 A1 offenbart ein Verfahren zum Betreiben eines Luftmassensensors für eine Brennkraftmaschine in Fahrzeugen ohne Start-Stopp-Automatik. Der hier offenbarte Luftmassensensor erkennt einen Stillstand der Brennkraftmaschine und steuert daraufhin in einen zweiten Betriebsmodus, der eine Verschmutzung des Luftmassensensorelementes durch Öltröpfchen nach dem Abschalten der Brennkraftmaschine reduziert.

Die DE 10 2008 020 182 A1 offenbart ein Verfahren zum Steuern einer Brennkraftmaschine für ein Fahrzeug, welches eine Bremsvorrichtung und eine Start-Stopp-Automatik aufweist. Gemäß dem Verfahren wird ein Abschalten der Brennkraftmaschine durch die Start-Stopp-Automatik verhindert. Es wird eine Betriebsgröße der Bremsvorrichtung ermittelt. Das Abschalten der Brennkraftmaschine durch die Start-Stopp-Automatik wird wieder erlaubt, wenn eine auf der Betriebsgröße basierende Bedingung erfüllt ist.

Moderne Luftmassensensorelemente die als Mikro-Elektro-Mechanische Systeme (MEMS)aufgebaut sind, arbeiten sehr genau und schnell. Zudem sind sie kostengünstig herstellbar. Leider sind die als Mikro-Elektro-Mechanisches System konzipierten Luftmassensensorelemente sehr anfällig gegen Verschmutzungen der Oberfläche des Sensorelementes. Die Oberfläche des Sensorelementes steht in direktem Kontakt mit dem Luftstrom, und im Luftstrom vorhandene Partikel können die Oberfläche des Sensorelementes schädigen. Deutlich verstärkt wird dieses Verschmutzungsproblem durch moderne Kraftfahrzeuge mit Start-Stopp-Automatik. Wenn eine heiße Brennkraftmaschine abgestellt wird, gelangen vermehrt Öltröpfchen aus der Brennkraftmaschine in den Ansaugtrakt. Zum Einen stellt sich eine sogenannter Kamineffekt ein, der einen Luftstrom von der heißen Brennkraftmaschine hin zu dem kalten Bereich des Luftfilters in Ansaugtrakt hervorruft und zum Anderen werden durch die Thermophorese oder Thermodiffusion die Öltröpfchen von der heißen Brennkraftmaschine hin zum kalten Luftfilterkasten getrieben.

Als Thermophorese, Thermodiffusion oder Ludwig-Soret-Effekt wird die Bewegung von Teilchen aufgrund eines Temperaturgradienten innerhalb eines Fluids bezeichnet. In den meisten Fällen erfolgt die Bewegung von heiß nach kalt, jedoch ist, abhängig von der Art der Teilchen und des Fluids, auch eine Bewegung zur heißeren Region möglich. Thermophorese tritt in allen Stoffen auf, deutlich beobachten lässt sich dieser Effekt bei Aerosolen, wie Öltröpfchen in der Luft, und auch bei Staubteilchen in Luft.

Ohne Temperaturgradienten prasseln auf ein Staubteilchen oder ein Öltröpfchen in der Luft von allen Seiten im Mittel gleichmäßig Luftmoleküle ein. Damit bewegt sich das Staubteilchen oder Öltröpfchen nach den Brownschen Gesetzen und seine Bewegung ist statistisch und ungerichtet, und im Mittel über viele Brownsche Stöße bewegt sich das Staubteilchen oder Öltröpfchen nicht von seinem Ort fort. Falls sich das Staubteilchen oder das Öltröpfchen jedoch in einem Temperaturgradienten befindet, treffen auf der heißen Seite schnellere Moleküle auf als auf der kalten, und das Teilchen erfährt damit einen Nettoimpuls in Richtung der kalten Seite. Die Bewegung ist immer noch statistisch, jedoch bewegt sich das Staubteilchen oder Öltröpfchen gemittelt über eine längere Zeit in Richtung des kalten Bereiches der Luft.

Es ist Aufgabe der vorliegenden Erfindung, ein Verfahren zum Betreiben eines Luftmassensensors der eingangs genannten Art anzugeben, das insbesondere bei Fahrzeugen mit Start-Stopp-Automatik die Verschmutzung des Luftmassensensorelementes reduziert.

Diese Aufgabe wird durch die Merkmale des unabhängigen Anspruchs gelöst. Vorteilhafte Ausführungsformen sind Gegenstand der abhängigen Ansprüche.

Erfindungsgemäß erkennt der Luftmassensensor, mit Hilfe des Elementes zur Auswertung der von dem Luftmassensensorelement erzeugten Messsignale, einen Stillstand der Brennkraftmaschine und steuert daraufhin das Luftmassensensorelement in einen zweiten Betriebsmodus, der eine Verschmutzung des Luftmassensensorelementes reduziert, wobei der zweite Betriebsmodus zumindest eine Messung der im Ansaugtrakt strömenden Luftmasse noch zulässt, wodurch der Luftmassensensor selber, mit Hilfe des Elementes zur Auswertung der von dem Luftmassensensorelement erzeugten Messsignale und anhand der Messsignale des Luftmassensensorelementes das Anspringen der Brennkraftmaschine erkennt und daraufhin das Luftmassensensorelement in einen ersten Betriebsmodus steuert, der es ermöglicht, die durch den Ansaugtrakt strömende Luftmasse mit hoher Genauigkeit zu messen. Mit dem hier vorgeschlagenen Verfahren, ist der Luftmassensensor selbständig in der Lage zwischen einer laufenden und einer stehenden Brennkraftmaschine zu unterscheiden und sich der Situation entsprechend mit zwei verschiedenen Betriebsmodi anzupassen. In einem ersten Betriebsmodus misst das in MEMS Technik ausgebildete Luftmassensensorelement den Luftmassenstrom in dem Ansaugtrakt mit hoher Genauigkeit, und in dem zweiten Betriebsmodus schützt sich das Luftmassensensorelement gegen eine Verschmutzung durch Öltröpfchen oder Staub, das Luftmassensensorelement verbleibt aber in der Lage den Luftmassenstrom, wenn auch nur mit geringer Auflösung, zu messen. Das Hin- und Herschalten zwischen dem ersten Betriebsmodus, in dem der Luftmassensensor mit hoher Genauigkeit den Luftmassenstrom im Ansaugtrakt vermessen kann, und dem zweiten Betriebsmodus, bei dem der Luftmassensensor in einer Selbstschutzfunktion verharrt, aber dennoch nicht vollständig abgeschaltet ist, erfolgt völlig unabhängig von dem Motorsteuergerät und ausschließlich mit Hilfe des anwendungsspezifischen integrierten Schaltkreises und dem Element zur Auswertung der vom Luftmassensensorelement erzeugten Messwerte und innerhalb des Luftmassensensors selbst. Ein derartig intelligenter Luftmassensensor entlastet zum einen das Motorsteuergerät und zum anderen den Datenbus zwischen dem Luftmassensensor und dem Motorsteuergerät. Darüber hinaus schaltet der nach dem erfindungsgemäßen Verfahren betriebene Luftmassensensor sehr schnell zwischen den beiden Betriebsmodi hin und her, was bei einer Einbindung des Motorsteuergerätes nicht der Fall wäre.

Es ist vorteilhaft, wenn das Element zur Auswertung der von dem Luftmassensensorelement erzeugten Messsignale im Gehäuse des Luftmassensensors angeordnet ist. Dadurch wird der Luftmassensensor unabhängig von dem Motorsteuergerät.

Wenn das Element zur Auswertung der von dem Luftmassensensorelement erzeugten Messsignale Bestandteil des anwendungsspezifischen integrierten Schaltkreises ist, ist es ohne zusätzliche Kosten zusammen mit dem Luftmassensensorelement herstellbar.

Bei einer Weiterbildung der Erfindung erkennt der Luftmassensensor, mit Hilfe des Elementes zur Auswertung der von dem Luftmassensensorelement erzeugten Messsignale, einen Stillstand der Brennkraftmaschine, wenn kein Massenstrom oder ein konstanter Rückwärtsstrom oder ein konstanter Vorwärtsstrom, der kleiner als der Leerlaufmassenstrom ist, gemessen wird.

Weitere Merkmale und Vorteile der Erfindung werden nachfolgend unter Beschreibung eines Ausführungsbeispiels mit Bezugnahme auf die Abbildungen der Zeichnung angegeben. Über die verschiedenen Abbildungen hinweg werden nachfolgend gleiche Begriffe und Bezugszeichen für gleiche Bauelemente verwendet werden. Dabei zeigt:
- Figur 1:: ein Luftmassensensorelement,
- Figur 2:: einen Luftmassensensor, der als Einsteckfinger in einem Ansaugtrakt integriert ist.

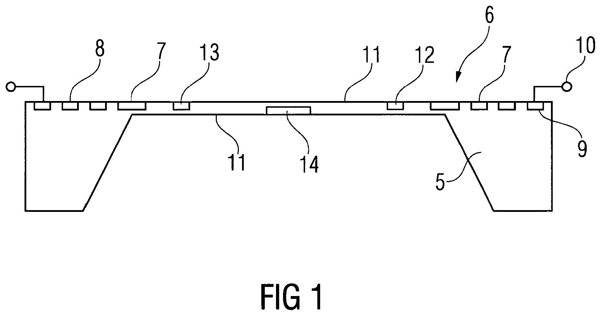

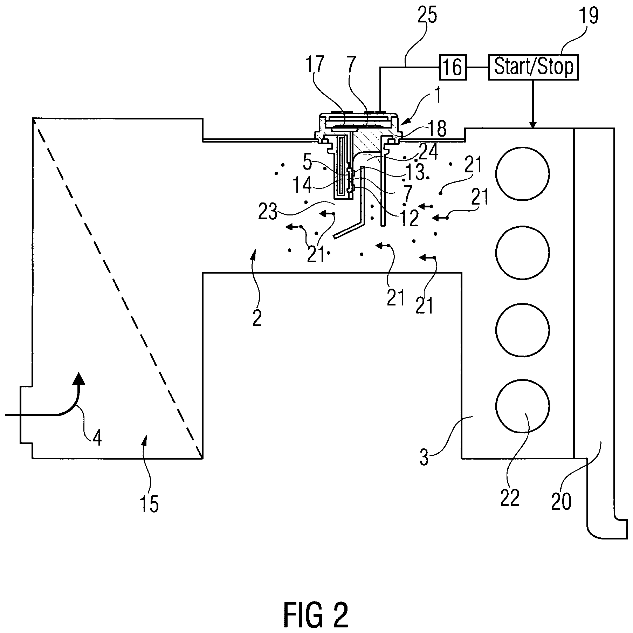

Figur 1 zeigt ein Luftmassensensorelement 5. Das Luftmassensensorelement 5 ist als Mikro-Elektro-Mechanisches System (MEMS) auf einem einzigen Silizium-Chip ausgebildet. Das Luftmassensensorelement 5 arbeitet nach dem Differenztemperaturverfahren und bestimmt damit die Masse der vorbeiströmenden Luftmenge. Hierzu sind auf einer dünnen Membran 11 ein erstes Temperatursensorelement 12 und ein zweites Temperatursensorelement 13 ausgebildet. Das erste und das zweite Temperatursensorelement 12, 13 befinden sich an unterschiedlichen Orten auf der Oberfläche der Membran 11. Zwischen dem ersten Temperatursensorelement 12 und dem zweiten Temperatursensorelement 13 ist ein Heizelement 14 angeordnet. Das erste Temperatursensorelement 12 und das zweiten Temperatursensorelement 13 sowie das Heizelement 14 sind Bestandteile eines anwendungsspezifischen integrierten Schaltkreises 6. Auf dem als Mikro-Elektro-Mechanisches System aufgebauten Luftmassensensorelement 5 kann zudem eine Auswerteelektronik 7 integriert sein, die die Messsignale der Temperatursensorelemente 12, 13 sofort auswertet und in ein Signal, das proportional zum Luftmassenstrom ist, erzeugt. Die Auswerteelektronik 7 kann jedoch ebenso gut in einem nachgeschalteten elektronischen Gerät im Gehäuse 18 des Luftmassensensors 1 angeordnet sein. Wichtig hierbei ist, dass das Motorsteuergerät 16 von der Aufgabe der Auswertung der Messsignale des Luftmassensensorelementes 5 entbunden ist. Das Motorsteuergerät 16 erhält die vollständig verarbeiteten Messergebnisse vom Luftmassensensor 1 als digitales Signal. Die Informationen über den Luftmassenstrom werden dann über Anschlusselemente 9 und Anschlussdrähte 10 an ein in Figur 2 dargestelltes Motorsteuergerät 16 weitergeleitet.

Figur 2 zeigt das Luftmassensensorelement 5, das als Mikro-Elektro-Mechanisches System (MEMS) ausgebildet ist und in einem Luftmassensensor 1 angeordnet ist, der als Einsteckfinger in einem Ansaugtrakt 2 einer brennkraftmaschine 3 integriert ist. Der Luftmassenstrom 4 erreicht bei laufender Brennkraftmaschine 3 die Einlassöffnung 4 des Luftmassensensors 1 und tritt in das Hilfsrohr 24 ein. Auf der Oberfläche der dünnen Membran 11 sind das erste Temperatursensorelement 12 und das zweite Temperatursensorelement 13 zu erkennen. Zwischen dem ersten Temperatursensorelement 12 und dem zweiten Temperatursensorelement 13 ist das Heizelement 14 angeordnet. Der Luftmassenstrom 4 erreicht zunächst das erste Temperatursensorelement 12, überströmt dann das Heizelement 14, um danach das zweite Temperatursensorelement 13 zu erreichen. Aus den Messwerten des erste Temperatursensorelementes 12 und des zweiten Temperatursensorelement 13 und eventuell unter Einbeziehung der Temperatur des Heizelementes 14 kann bei laufender Brennkraftmaschine 3 der Luftmassenstrom 4 im Ansaugtrakt 2 mit hoher Genauigkeit berechnet werden. Die Messung und Berechnung des Luftmassenstromes 4 erfolgt ausschließlich im Luftmassensensor 1. Diese Information wird dann über einen geeigneten Datenweg 25 zum dem Motorsteuergerät 16 geleitet. Mit dieser Information kann das Motorsteuergerät 16 die optimale Treibstoffmenge errechnen, die den Brennräumen 22 der Brennkraftmaschine 3 zuzuführen ist.

Moderne Kraftfahrzeuge verfügen vermehrt über eine Start-Stopp-Automatik 19 die mit dem Motorsteuergerät 16 gekoppelt ist und beim Stillstand des Kraftfahrzeuges die Brennkraftmaschine 3 automatisch stilllegt. Wenn das Kraftfahrzeug dann wieder anfahren soll, weil zum Beispiel eine Verkehrsampel "Grün" zeigt, wird die Brennkraftmaschine 3 zum Beispiel beim Betätigen der Kupplung automatisch gestartet. Dies ist eine Maßnahme zur Einsparung von Kraftstoffen, die mittlerweile in Kraftfahrzeugen weit verbreitet ist. Beim Stoppen der Brennkraftmaschine 3 diffundieren aus dem heißen Motoröl Öltröpfchen 21, die auch in den Ansaugtrakt 2 gelangen. Durch den anfangs beschriebenen Effekt der Thermophorese und dem Kamineffekt bewegen sich die Öltröpfchen 21 im Ansaugtrakt 2 von der heißen Brennkraftmaschine 3 in Richtung des kalten Luftfilters 15. Dabei passieren die Öltröpfen 21 auch den Luftmassensensor 1 und dringen über das Hilfsrohr 24 des Luftmassensensors 1 bis zu dem Luftmassensensorelement 5 vor. Das Luftmassensensorelement 5 wird somit von den Öltröpfchen 21 verschmutzt, was sich äußerst negativ auf die Messeigenschaften des Luftmassensensorelementes 5 auswirkt. Ein durch Öltröpfchen 21 stark verschmutztes Luftmassensensorelement 5 kann stark verfälschte Messergebnisse liefern, und daher ist es äußerst wichtig, das Luftmassensensorelement 5 vor Verschmutzungen zu schützen. Zum Schutz des Luftmassensensorelementes 5 ist in dem Luftmassensensor 1 ein Elemente 7 zur Auswertung der von dem Luftmassensensorelement 5 erzeugten Messsignale angeordnet, das einen Stillstand der Brennkraftmaschine 3 erkennt und daraufhin das Luftmassensensorelement 5 in einen zweiten Betriebsmodus steuert, der eine Verschmutzung des Luftmassensensorelementes 5 reduziert. Wichtig ist, dass das Luftmassensensorelement 5 in dem zweiten Betriebsmodus weiterhin in der Lage ist, eine Messung der im Ansaugtrakt strömenden Luftmasse, mit zumindest geringer Auflösung, durchzuführen. Von dem Element 7 zur Auswertung der Signale des Luftmassensensorelementes 5 wird der Stillstand der Brennkraftmaschine 3 erkannt, wenn kein Luftmassenstrom 4 mehr messbar ist, oder ein konstanter Rückwärtsstrom der Luftmasse 4 detektiert wird, oder ein geringer und konstanter Vorwärtsstrom der Luftmasse 4 detektiert wird, der kleiner ist als der bekannte Leerlaufluftmassenstrom der Brennkraftmaschine 3. Im Leerlauf der Brennkraftmaschine 3 werden auf Grund der Dynamik auch kurzzeitig Massenströme kleiner Null oder kleiner des Leerlaufmassenstromes erreicht, da die Luftsäule im Ansaugtrakt 3 mit der entsprechenden Motordrehzahl mitschwingt. Die typischen Schwingungen einer Luftsäule liegen zwischen 20 und 33 Hertz. Wenn zum Beispiel für 50 Millisekunden ein negativer oder sehr kleiner Luftmassenstrom gemessen wird, erkennt der Luftmassensensor 1, dass sich die Brennkraftmaschine 3 im Stillstand befindet. Um die Verschmutzung des Luftmassensensorelementes 5 mit Öltröpfchen 21 zu verhindern, wird nun die Leistung des elektrischen Heizelementes 14 reduziert. Zum Beispiel kann die vom Heizelement 14 erzeugte Temperatur von 100 °C auf etwa 20 °C Übertemperatur reduziert werden. Als Übertemperatur wird die Temperatur bezeichnet, die über der Temperatur der Umgebungsluft, also der Temperatur der angesaugten Luftmasse 4, liegt. Beispielsweise kann die Temperatur der angesaugten Luftmasse 4 15 °C betragen und um eine Übertemperatur von 20 °C zu erreichen, wird das elektrische Heizelement 14 auf 35 °C eingeregelt. In diesem Zustand lagern sich keine oder nur sehr wenige Öltröpfchen 21 auf dem Luftmassensensorelement 5 ab. Dennoch ist der Luftmassensensor 1 in der Lage, bei anspringender Brennkraftmaschine einen Luftmassenstrom 4 zu messen, wenn auch nur mit relativ schlechter Auflösung, da das Heizelement 14 nur eine relativ geringe Temperatur von 35 °C aufweist. Wenn nun der Luftmassensensor 1 mit dem anwendungsspezifischen integrierten Schaltkreis 6 und dem Element 7 zur Auswertung der von dem Luftmassensensorelement 5 erzeugten Messsignale erkennt, dass die Brennkraftmaschine 3 wieder in Gang gesetzt wurde, steuert der anwendungsspezifische integrierte Schaltkreis 6 das Luftmassensensorelement 5 in einen ersten Betriebsmodus, der es ermöglicht, die durch den Ansaugtrakt 2 strömende Luftmasse 4 mit hoher Genauigkeit zu messen. Dieser erste Betriebsmodus, in dem die durch den Ansaugtrakt 3 strömende Luftmasse mit hoher Genauigkeit zu messen ist, ist beispielsweise erreicht, wenn das Heizelement 14 eine Temperatur von etwa 100 °C erreicht hat. Damit ist der nach dem erfindungsgemäßen Verfahren betriebene Luftmassensensor 1 in der Lage, völlig selbständig den Stillstand der Brennkraftmaschine 3 zu erkennen und dann in einen Ruhemodus zu fahren, indem der Luftmassensensor 1 sowohl in der Lage ist, das Anspringen der Brennkraftmaschine 3 zu erkennen als auch in einem Selbstschutzmodus zu verweilen, der dafür sorgt, dass das Luftmassensensorelement 5 nicht unnötig durch Öltröpfchen 21 verschmutzt wird, die auf Grund der Thermophorese und des Kamineffektes in den Ansaugtrakt 2 gedrängt werden. Das Hin- und Herschalten zwischen dem ersten Betriebsmodus, in dem der Luftmassensensor 1 mit hoher Genauigkeit die Luftmasse im Ansaugtrakt 2 vermessen kann, und dem zweiten Betriebsmodus, bei dem der Luftmassensensor in einer Selbstschutzfunktion verharrt, aber dennoch nicht vollständig abgeschaltet ist, erfolgt völlig unabhängig von dem Motorsteuergerät 16 und ausschließlich mit Hilfe des anwendungsspezifischen integrierten Schaltkreise 6 und dem Element 7 zur Auswertung der vom Luftmassensensorelement 5 erzeugten Messwerte und innerhalb des Luftmassensensors 1 selbst. Ein derartig intelligenter Luftmassensensor 1 entlastet zum einen das Motorsteuergerät 16 und zum anderen den Datenbus 25 zwischen dem Luftmassensensor 1 und dem Motorsteuergerät 16.

## Patentansprüche

1. Verfahren zum Betreiben eines Luftmassensensors 1, der im Ansaugtrakt 2 einer Brennkraftmaschine 3 angeordnet ist und die Masse 4 der durch den Ansaugtrakt 2 strömenden Luft misst, wobei der Luftmassensensor 1 ein Luftmassensensorelement 5 aufweist, das Bestandteil eines als Mikro-Elektro-Mechanisches System aufgebauten anwendungsspezifischen integrierten Schaltkreises 6 ist, wobei der Luftmassensensor 1 zumindest ein Element 7 zur Auswertung der von dem Luftmassensensorelement 5 erzeugten Messsignale aufweist, wobei der Luftmassensensor 1, mit Hilfe des Elementes 7 zur Auswertung der von dem Luftmassensensorelement 5 erzeugten Messsignale, einen Stillstand der Brennkraftmaschine erkennt und daraufhin das Luftmassensensorelement 5 in einen zweiten Betriebsmodus steuert, der eine Verschmutzung des Luftmassensensorelementes 5 reduziert, **dadurch gekennzeichnet, dass** der zweite Betriebsmodus zumindest eine Messung der im Ansaugtrakt 2 strömenden Luftmasse 4 noch zulässt, wodurch der Luftmassensensor 1 selber mit Hilfe des Elementes 7 zur Auswertung der von dem Luftmassensensorelement 5 erzeugten Messsignale und anhand der Messsignale des Luftmassensensorelementes 5 das Anspringen der Brennkraftmaschine 3 erkennt und daraufhin das Luftmassensensorelement 5 in einen ersten Betriebsmodus steuert, der es ermöglicht, die durch den Ansaugtrakt 2 strömenden Luftmasse 4 mit hoher Genauigkeit zu messen.

2. Verfahren zum Betreiben eines Luftmassensensors 1 nach Anspruch 1, **dadurch gekennzeichnet, dass** das Element 7 zur Auswertung der von dem Luftmassensensorelement 5 erzeugten Messsignale im Gehäuse 18 des Luftmassensensors 1 angeordnet ist.

3. Verfahren zum Betreiben eines Luftmassensensors 1 nach Anspruch 1 oder 2, **dadurch gekennzeichnet, dass** das Element 7 zur Auswertung der von dem Luftmassensensorelement 5 erzeugten Messsignale ein Bestandteil des anwendungsspezifischen integrierten Schaltkreises 6 ist.

4. Verfahren zum Betreiben eines Luftmassensensors 1 nach einem der vorstehenden Ansprüche 1 bis 3, **dadurch gekennzeichnet, dass** der Luftmassensensor 1, mit Hilfe des Elementes 7 zur Auswertung der von dem Luftmassensensorelement 5 erzeugten Messsignale, einen Stillstand der Brennkraftmaschine erkennt, wenn kein Massenstrom oder ein konstanter Rückwärtsstrom oder ein konstanter Vorwärtsstrom, der kleiner als der Leerlaufmassenstrom ist, gemessen wird.

## Claims

1. Method for operating an air mass sensor 1 which is arranged in the intake section 2 of an internal combustion engine 3 and measures the mass 4 of air flowing through the intake section 2, wherein the air mass sensor 1 has an air mass sensor element 5 which is part of an application-specific, integrated circuit 6 which is constructed as a micro-electromechanical system, wherein the air mass sensor 1 has at least one element 7 for evaluating the measurement signals generated by the air mass sensor element 5, wherein the air mass sensor 1 detects a stationary state of the internal combustion engine using the element 7 for evaluating the measurement signals generated by the air mass sensor element 5, and in response switches the air mass sensor element 5 into a second operating mode which reduces contamination of the air mass sensor element 5, **characterized in that** the second operating mode still permits at least one measurement of the air mass 4 flowing in the intake section 2, as a result of which the air mass sensor 1 itself detects the starting of the internal combustion engine 3 using the element 7 for evaluating the measurement signals generated by the air mass sensor element 5 and using the measurement signals of the air mass sensor element 5, and in response switches the air mass sensor element 5 into a first operating mode which permits said air mass sensor element 5 to measure the air mass 4 flowing through the intake section 2 with high accuracy.

2. Method for operating an air mass sensor 1 according to Claim 1, **characterized in that** the element 7 for evaluating the measurement signals generated by the air mass sensor element 5 is arranged in the housing 18 of the air mass sensor 1.

3. Method for operating an air mass sensor 1 according to Claim 1 and 2, **characterized in that** the element 7 for evaluating the measurement signals generated by the air mass sensor element 5 is a part of the application-specific, integrated circuit 6.

4. Method for operating an air mass sensor 1 according to one of the preceding Claims 1 to 3, **characterized in that** the air mass sensor 1 detects a stationary state of the internal combustion engine using the element 7 for evaluating the measurement signals generated by the air mass sensor element 5, if no mass flow or a constant reverse flow or a constant forward flow which is less than the idling mass flow is measured.

## Revendications

1. Procédé de mise en fonctionnement d'un capteur de masse d'air 1 qui est disposé dans un conduit d'aspiration 2 d'un moteur à combustion interne 3 et mesure la masse 4 de l'air s'écoulant par le conduit d'aspiration 2, dans lequel le capteur de masse d'air 1 présente un élément de capteur de masse d'air 5 qui fait partie intégrante d'un circuit intégré 6 spécifique à l'application, conçu sous la forme d'un système micro-électromécanique, dans lequel le capteur de masse d'air 1 comporte au moins un élément 7 servant à évaluer les signaux de mesure générés par l'élément de capteur de masse d'air 5, dans lequel le capteur de masse d'air 1, à l'aide de l'élément 7 servant à évaluer les signaux de mesure générés par l'élément de capteur de masse d'air 5, détecte un arrêt du moteur à combustion interne et à partir de là, fait passer l'élément de capteur de masse d'air 5 dans un deuxième mode de fonctionnement qui réduit un encrassement de l'élément de capteur de masse d'air 5, **caractérisé en ce que** le deuxième mode de fonctionnement permet encore au moins une mesure de la masse d'air 4 s'écoulant dans le conduit d'aspiration 2, d'où il résulte que l'élément de capteur de masse d'air 1 détecte lui-même, à l'aide de l'élément 7 servant à évaluer les signaux de mesure générés par l'élément de capteur de masse d'air 5 et sur la base des signaux de mesure de l'élément de capteur de masse d'air 5, le démarrage du moteur à combustion interne 3 et à partir de là, fait passer l'élément de capteur de masse d'air 5 dans un premier mode de fonctionnement qui permet de mesurer avec une plus grande précision la masse d'air 4 s'écoulant par le conduit d'aspiration 2.

2. Procédé de mise en fonctionnement d'un capteur de masse d'air 1 selon la revendication 1, **caractérisé en ce que** l'élément 7 servant à évaluer les signaux de mesure générés par l'élément de capteur de masse d'air 5 est disposé dans un boîtier 18 du capteur de masse d'air 1.

3. Procédé de mise en fonctionnement d'un capteur de masse d'air 1 selon la revendication 1 ou 2, **caractérisé en ce que** l'élément 7 servant à évaluer les signaux de mesure générés par l'élément de capteur de masse d'air 5 fait partie intégrante du circuit intégré 6 spécifique à l'application.

4. Procédé de mise en fonctionnement d'un capteur de masse d'air 1 selon l'une quelconque des revendications 1 à 3 précédentes, **caractérisé en ce que** le capteur de masse d'air 1, à l'aide de l'élément 7 servant à évaluer les signaux de mesure générés par l'élément de capteur de masse d'air 5, détecte un arrêt du moteur à combustion interne lorsqu'aucun débit massique ou lorsqu'un débit constant vers l'arrière ou lorsqu'un débit constant vers l'avant, qui est inférieur au débit massique à vide, est mesuré.
